# FASCICULE DE BREVET EUROPEEN

(11) **EP 0 524 850 B1**
(45) Date de publication et mention de la délivrance du brevet: **05.04.1995**
(21) Numéro de dépôt: 92401890.6
(22) Date de dépôt: 02.07.1992
(51) Int. Cl.: B65B 3/28, B67C 3/20, G01G 13/285

(54) **Procédé de dosage pondéral pour remplissage de récipients**
Verfahren zur gewichtsmässigen Dosierung beim Füllen von Behältern
Weight-responsive dosage method for filling containers

(30) Priorité: 23.07.1991 FR 9109287
(43) Date de publication de la demande: 27.01.1993
(73) Titulaire: Graffin, André, F-72405 La Chapelle du Bois (FR)
(72) Inventeur: Graffin, André, F-72405 La Chapelle du Bois (FR)
(74) Mandataire: Fruchard, Guy

(56) Documents cités:
- EP-A- 0 052 546
- EP-A- 0 221 367
- EP-A- 0 406 092
- EP-A- 0 430 897

## Description

La présente invention concerne un procédé de dosage pondéral.

On connaît des dispositifs de dosage pondéral comprenant généralement un carrousel ayant une plate-forme montée pour tourner et supportant une série d'organes de pesage au-dessus desquels sont disposés des becs de remplissage reliés à un organe d'alimentation. L'ouverture et la fermeture des becs de remplissage est commandée par une unité de traitement pondéral reliée aux organes de pesage. Les récipients à remplir sont amenés les uns à la suite des autres sur un organe de pesage et sont remplis pendant la rotation de la plate-forme avant d'être évacués de celle-ci.

Compte-tenu de l'encombrement des dispositifs de mise en place des récipients vides et de retrait des récipients remplis, le remplissage ne peut pas être effectué sur la totalité d'un tour de la plate-forme mais sur une partie seulement de ce tour. Le remplissage s'effectue généralement dans un secteur angulaire de l'ordre de 270° auquel correspond un temps maximum de remplissage qui est fonction de la vitesse de rotation de la plate-forme. Cette vitesse de rotation de la plate-forme est elle-même donnée par la cadence que l'on souhaite obtenir pour l'ensemble de l'installation. Dans les systèmes actuels il est courant de demander qu'une installation ait une cadence de remplissage pouvant aller jusqu'à plusieurs centaines de récipients par minute.

Dans les systèmes actuels, le poids de produit introduit dans un récipient est commandé soit de façon temporisée soit de façon pondérale. Dans le cas d'une coupure temporisée, on détermine tout d'abord une première estimation du temps nécessaire pour introduire un poids déterminé de produit dans un récipient, puis on contrôle le poids effectif introduit dans les récipients et on adapte la durée d'ouverture des becs de remplissage en fonction de la différence entre le poids effectif mesuré et le poids de référence que l'on souhaite introduire dans le récipient. Afin de pouvoir adapter la durée effective du remplissage il est donc nécessaire de prévoir en fin de remplissage une plage de temps correspondant à un secteur angulaire, pendant laquelle les becs de remplissage pourront être ouverts ou fermés. Cette plage de temps est plus ou moins utilisée suivant que le remplissage effectif se réalise plus lentement ou plus rapidement que prévu initialement. Cette plage de temps doit être prélevée sur la durée maximale de remplissage disponible de sorte que la durée effective de remplissage est inférieure à la durée maximale de remplissage.

Dans le cas d'un remplissage pondéral proprement dit, l'arrêt du remplissage est commandé par l'organe de pesage lorsque le poids de produit introduit dans le récipient atteint un seuil déterminé. La durée effective de remplissage est donc variable, notamment en fonction de la viscosité du produit. En dépit d'une régulation du débit comme prévu par exemple dans le document EP-A-406 092, il est donc également nécessaire de prévoir en fin de remplissage une plage de temps pendant laquelle les becs de remplissage seront fermés ou maintenus ouverts selon que le seuil de poids de référence a été atteint ou non. Comme dans le cas précédent, il n'est donc pas possible de disposer de façon constante de la durée maximale de remplissage.

Dans un cas comme dans l'autre il est donc nécessaire de prévoir une vitesse de rotation de la plate-forme permettant un remplissage normal sur un secteur angulaire inférieur au secteur angulaire maximum, par exemple sur un secteur angulaire de 240° au lieu de 270°. Etant donné que le débit maximal à travers un bec de remplissage est forcément limité, l'existence d'une plage de temps d'adaptation limite donc nécessairement la vitesse de rotation de la plate-forme afin de disposer d'un temps suffisant pour effectuer normalement le remplissage pendant le balayage de l'angle de 240°. La cadence de l'installation se trouve donc limitée de façon correspondante.

De plus, dans le cas d'un produit pâteux, il est nécessaire d'exercer une pression sur le produit pour qu'il sorte du bec de remplissage. Cette pression est plus ou moins transmise par le jet du produit sur la surface du produit dans le flacon selon la viscosité du produit et fausse donc l'information qui est donnée par l'organe de pesage. Dans le cas d'un dosage pondéral proprement dit, c'est-à-dire d'une fermeture du bec de remplissage lorsque le poids atteint un seuil déterminé, une telle imprécision entraîne des erreurs inadmissibles.

Le but de l'invention est de proposer un procédé permettant d'augmenter la cadence de remplissage par rapport aux procédés existants sans perte de précision.

En vue de la réalisation de ce but, on propose selon l'invention un procédé de dosage pondéral comportant les étapes d'introduire un produit dans un récipient selon au moins une phase de remplissage à un débit asservi à un débit de référence par une relation d'asservissement entre un écart de débit et une consigne d'un organe de commande de débit, et de mesurer le poids de produit contenu dans le récipient après remplissage, caractérisé en ce que ladite au moins une phase de remplissage a une durée fixe et en ce que le procédé comporte en outre les étapes de comparer le poids de produit contenu dans le récipient à un poids de référence, et d'ajuster le débit de référence ou la relation d'asservissement en fonction d'une différence entre le poids de produit contenu dans le récipient et le poids de référence.

Ainsi, la durée du remplissage étant constante, la totalité de la zone de remplissage est utilisée pour chaque remplissage de sorte que la vitesse de rotation de la plate-forme peut être augmentée pour que le balayage de la zone de remplissage s'effectue dans le temps fixe imparti. En outre, le remplissage effectué en contrôlant un débit et non un poids permet d'éliminer les grandeurs qui perturbent habituellement la pesée, notamment la pression du jet et la queue de chute, ce qui permet d'effectuer une correction systématique d'une grande précision.

Selon une version avantageuse de l'invention, lorsque le procédé comporte au moins deux phases de remplissage de débits de référence différents, on ajuste au moins l'un des débit de référence en fonction de la différence entre le poids de produit contenu dans le récipient et le poids de référence. Ainsi, lorsque le procédé comporte des phases de remplissage à des débits notablement différents, une faible différence du poids du produit contenu dans le récipient par rapport au poids de référence peut être corrigée en agissant sur le débit le plus faible tandis qu'une forte différence est de préférence compensée en agissant sur le débit le plus fort.

D'autres caractéristiques et avantages de l'invention apparaîtront à la lecture de la description qui suit en relation avec les figures ci-jointes parmi lesquelles :
la figure 1 est un diagramme schématique du dispositif de dosage pondéral selon l'invention.
La figure 2 est un diagramme illustrant le procédé selon l'invention.

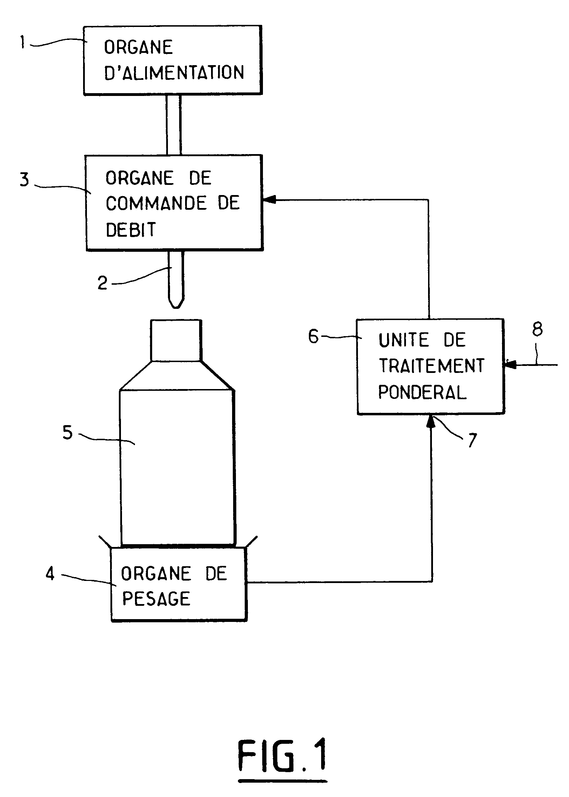

En référence, à la figure 1, le dispositif comporte un organe d'alimentation 1. L'organe d'alimentation est par exemple une cuve portée par la plate-forme rotative d'un carrousel ou une cuve séparée du carrousel et reliée à celui-ci par une canalisation comportant un joint tournant. L'écoulement à partir de l'organe d'alimentation peut être favorisé par une pompe centrifuge.

L'organe d'alimentation 1 est relié à une série de becs de remplissage 2, dont un seul a été représenté sur la figure, par l'intermédiaire d'organes de commande de débit 3 chacun disposé en amont d'un bec de remplissage, par référence au sens d'écoulement du produit. Les organes de commande de débit 3 sont par exemple des vannes à ouverture variable ou des vis d'Archimède commandées par un moteur pas à pas à vitesse variable, la vitesse du moteur déterminant le débit entraîné par la vis d'Archimède en particulier dans le cas d'un produit pâteux tel que de la mayonnaise ou d'un produit hétérogène tel que des sauces avec morceaux.

Un organe de pesage 4 est disposé en-dessous de chaque bec de remplissage, à l'aplomb de celui-ci et un récipient 5 est introduit sur chaque organe de pesage au début du cycle de remplissage.

L'organe de pesage est relié à une entrée 7 d'une unité de traitement pondéral 6 ayant une autre entrée 8 par laquelle sont introduites des données initiales spécifiques au produit à conditionner. Ces données initiales sont en particulier le débit de référence et la durée de chaque phase de remplissage mais également la relation d'asservissement qui existe entre un écart de débit mesuré et la consigne que l'unité de traitement pondéral doit envoyer à l'organe de commande de débit. On comprendra en effet que cette relation d'asservissement n'est pas la même suivant que le produit est très fluide ou au contraire très pâteux. En particulier, si l'organe de commande de débit est une vanne à ouverture variable un même débit, par exemple 50 g/s ne sera pas obtenu avec la même section d'ouverture selon que le produit est liquide ou pâteux, ou même, à identité de produit, selon la pression qui est appliquée en amont de l'organe de commande de débit ou la température du produit (qui détermine sa viscosité). Les données initiales contiennent donc soit directement la relation d'asservissement entre l'écart de débit et la consigne à appliquer à l'organe de commande de débit, soit des paramètres tels que la nature du produit, sa température, sa pression d'alimentation, l'unité de traitement pondéral étant alors équipée d'organes de calcul permettant d'établir la relation d'asservissement entre le débit de référence et la consigne à appliquer à l'organe de commande de débit. Comme il a été vu ci-dessus cette consigne dépend du type d'organe de commande de débit employé. A titre d'exemple elle est donnée par une dimension d'ouverture pour une vanne à ouverture variable ou par une vitesse de rotation de moteur pour une vis d'Archimède. La sortie de l'unité de traitement pondéral 6 est reliée à l'organe de commande de débit pour former une boucle d'asservissement.

Par ailleurs, l'unité de traitement pondéral 6 est équipée d'une façon connue en soi d'une horloge et d'une unité de calcul permettant de déterminer à tout instant le débit effectif de remplissage du récipient en faisant le rapport entre l'augmentation de poids du récipient et le temps écoulé depuis la mesure précédente de poids. Etant donné que les organes de pesage actuels ont une réaction extrêmement rapide, de l'ordre du millième de seconde, la pression du jet de produit n'a pratiquement pas le temps de changer dans l'intervalle qui sépare deux mesures de poids de sorte que la différence de poids qui est mesurée est effectivement représentative de la quantité de produit qui a été introduite dans le récipient pendant l'intervalle de temps considéré et l'on obtient donc une mesure extrêmement précise du débit effectif.

Ainsi qu'il a été indiqué ci-dessus, les données initiales de débit de référence et de durée de chacune des phases de remplissage sont introduites dans l'unité de traitement pondéral en fonction du produit à conditionner. Par exemple, si l'on souhaite conditionner un kilo d'un liquide susceptible de mousser lorsqu'il percute brutalement le fond du récipient, on prévoira de préférence une première phase de remplissage à faible débit pour introduire une petite quantité de produit sans le faire mousser, par exemple une première phase à un débit de cent grammes par seconde pendant 0,5 seconde, puis une phase de remplissage proprement dit à un débit plus élevé, par exemple à un débit de cinq cents grammes par seconde pendant 1,8 seconde et enfin une phase de fin de remplissage de nouveau à faible débit pour permettre un arrêt précis de l'écoulement. La phase finale est par exemple à un débit de cent grammes par seconde pendant 0,5 seconde.

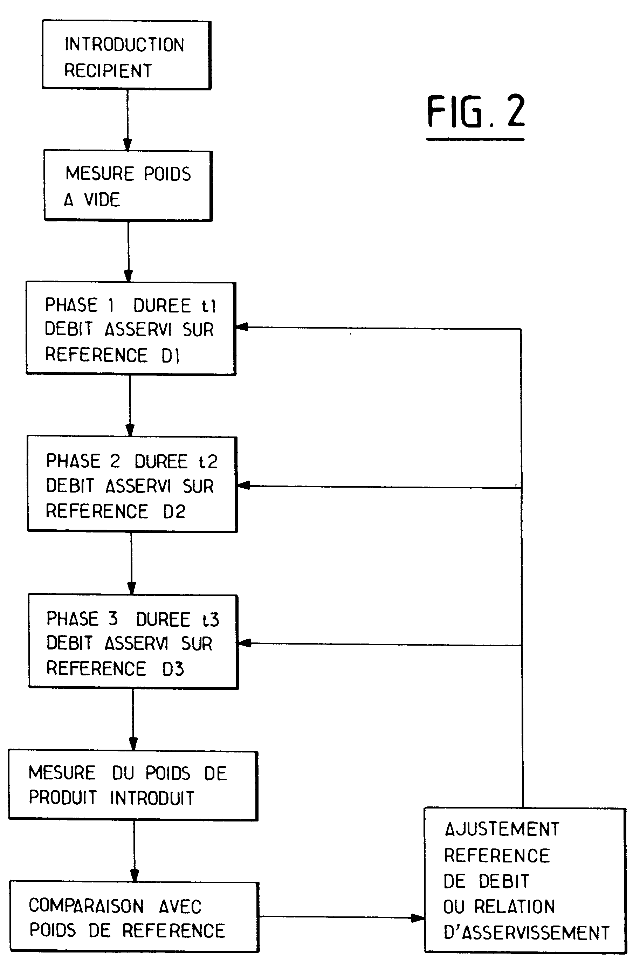

Le procédé de remplissage se déroule alors comme illustré par la figure 2 c'est-à-dire qu'un récipient est tout d'abord introduit sur l'organe de pesage qui transmet à l'unité de traitement pondéral la mesure du poids à vide du récipient. La première phase est ensuite exécutée, par exemple l'ouverture de l'organe de commande de débit 3 est commandée pour délivrer un débit D1 pendant une durée t1. Dans l'exemple invoqué ci-dessus on aura donc D1 = 100 g/s et t1 = 0,5 s, la consigne initiale de l'organe de commande de débit est fonction du débit de référence par application de la relation d'asservissement introduite ou calculée initialement par l'unité de traitement pondéral comme il a été vu ci-dessus. L'organe de pesage mesure à intervalle périodique, par exemple tout les centièmes de seconde, le poids apparent, c'est-à-dire la force qui est appliquée sur l'organe de pesage et qui résulte en réalité non seulement du poids du récipient à vide et du produit qu'il contient mais également de la pression résultant du jet de produit. Cette information est envoyée à l'unité de traitement pondéral qui effectue la différence avec l'information prélevée à l'instant précédent et effectue le rapport entre cette différence et le temps écoulé. Si le débit effectif ainsi déterminé est différent du débit de référence D1, une correction est instantanément apportée au niveau de l'organe de commande de débit par une nouvelle consigne qui résulte de l'application de la relation d'asservissement précitée à l'écart de débit. Lorsque le temps t1 est écoulé, l'unité de traitement pondéral envoie une nouvelle consigne pour régler l'organe de commande de débit afin de délivrer le produit selon le débit de référence D2 pendant un temps t2. De même que précédemment, si le débit effectif est différent du débit de référence, l'unité du traitement pondéral modifie la consigne de l'organe de commande de débit pour que le débit effectif devienne égal au débit de référence. Il en est de même pendant la troisième phase de remplissage.

Lorsque le remplissage est terminé, l'organe de pesage envoie à l'unité de traitement pondéral un signal de mesure du poids total qui n'est plus faussé par la pression du jet de produit. Par différence avec le poids à vide du récipient on calcule donc dans l'unité de traitement pondéral le poids net de produit introduit dans le récipient et on compare ce poids net au poids de référence, soit 1 kg dans l'exemple considéré. Si le poids net est différent du poids de référence, on ajuste au moins l'un des débits de référence afin de compenser cette différence lors du remplissage suivant. Par exemple, dans l'exemple considéré, si le poids est de 998 g seulement, on porte le débit de référence de la dernière phase à 54 g/s, ce qui modifie automatiquement la consigne de départ de l'organe de commande de débit au début de cette phase. Si la différence entre le poids net effectif et le poids de référence est important, il peut être souhaitable de modifier le débit de référence de la seconde phase de remplissage plutôt que le débit de référence de la troisième phase de remplissage. Le choix du débit de référence à modifier peut être obtenu par la détermination d'un seuil de la différence entre le poids net effectif et le poids net de référence afin de ne pas modifier de façon trop importante le débit de référence de la troisième phase de remplissage : par exemple, si la différence entre le poids net effectif et le poids net de référence à la fin d'un premier remplissage est de 90 g par excès, par exemple en raison d'une fluidité du produit beaucoup plus grande que prévue, il n'est pas envisageable de supprimer totalement la troisième phase de remplissage pour compenser cet excès et il est préférable de diminuer la référence de débit de la seconde phase du remplissage pour l'amener à 450 g/s tout en maintenant constante la relation d'asservissement entre le débit mesuré et la consigne sur l'organe de commande de débit de sorte que l'asservissement à un débit de 450 g/s pendant 1,8 s permettra en réalité l'écoulement d'un poids de 900 g de produit.

On remarquera qu'en raison du caractère constant de la durée du remplissage il est possible d'utiliser tout le secteur angulaire disponible pour le remplissage. Ainsi, dans l'exemple ci-dessus où la durée totale du remplissage est 2,8 secondes et en supposant que le secteur angulaire disponible pour l'opération complète de remplissage soit de 270° il sera donc possible d'entraîner la plate-forme du carrousel à une vitesse lui permettant d'effectuer un tour en 3,7 secondes, c'est-à-dire 16,2 t/mn. Pour une machine équipée de 10 becs de remplissage on obtiendra donc une cadence globale de 162 récipients remplis par minute. Au contraire, dans les dispositifs existants où il est nécessaire de ménager une plage de temps d'adaptation en fin de remplissage, et en supposant que la durée de remplissage minimale soit de 2,8 secondes comme dans le cas précédent, on ne disposera que d'un secteur angulaire de 240° qui devra lui aussi être balayé en 2,8 secondes ce qui portera à 4,2 secondes la durée d'un tour de la plate-forme. La plate-forme effectuera donc seulement 14,2 t/mn et pour une installation équipée de 10 becs de remplissage la cadence totale ne sera donc que de 142 récipients par minute. On constate donc que l'invention permet d'améliorer notablement la cadence d'une installation par rapport aux installations existantes.

Bien que l'invention ait été décrite ci-dessus en prévoyant d'ajuster le débit de référence si le poids net effectif n'est pas conforme au poids net de référence, le procédé selon l'invention peut également être mis en oeuvre sous toutes formes directement équivalentes, c'est-à-dire en agissant sur l'un des paramètres de la relation d'asservissement entre le débit mesuré et la consigne donnée à l'organe de commande de débit. En particulier, on peut agir sur le gain de la boucle d'asservissement formée par l'organe de pesage 4, l'unité de traitement pondéral 6 et l'organe de commande de débit 3. Dans ce cas, pour une même valeur de débit de référence, la modification d'un paramètre de la boucle d'asservissement modifie non seulement la consigne de départ donnée à l'organe de commande de débit mais également les réactions de cet organe pendant l'asservissement de sorte que tout en maintenant constante la durée du remplissage on peut corriger le poids net effectif introduit dans un récipient. Les modifications effectuées sur les paramètres de la boucle d'asservissement peuvent porter soit sur le gain de cette boucle soit encore sur la comparaison entre le débit effectif et le débit de référence, par exemple en effectuant une moyenne plus ou moins pondérée des débits effectifs avant d'effectuer la comparaison avec le débit de référence et l'envoi d'une nouvelle consigne à l'organe de commande de débit.

Bien entendu l'invention n'est pas limitée au mode de réalisation décrit et on peut y apporter des variantes de réalisation sans sortir du cadre de l'invention. En particulier, bien que l'invention ait été illustrée schématiquement avec un bec de remplissage fixe disposé au-dessus du col du récipient, on peut prévoir une canne de remplissage mobile qui est tout d'abord introduite dans le récipient puis relevée progressivement au cours du remplissage. En effet une telle procédure est possible avec l'invention alors que l'utilisation d'une canne plongeante dans les machines pondérales où la commande de fermeture de l'arrivée du produit est déclenchée par un seuil de poids est sujette à une grande imprécision en raison de la poussée d'Archimède qui résulte de l'immersion de la canne de remplissage dans le produit et dont les effets se font sentir sur la mesure de poids effectuée par l'organe de pesage.

## Revendications

1. Procédé de dosage pondéral comportant les étapes d'introduire un produit dans un récipient selon au moins une phase de remplissage à un débit asservi à un débit de référence par une relation d'asservissement entre un écart de débit et une consigne d'un organe de commande de débit, et de mesurer le poids de produit contenu dans le récipient après remplissage, caractérisé en ce que ladite au moins une phase de remplissage a une durée fixe et en ce que le procédé comporte en outre les étapes de comparer le poids de produit contenu dans le récipient à un poids de référence, et d'ajuster le débit de référence ou la relation d'asservissement en fonction d'une différence entre le poids de produit contenu dans le récipient et le poids de référence.

2. Procédé de dosage pondéral selon la revendication 1 caractérisé en ce qu'il comporte au moins deux phases de remplissage à des débits de référence différents et en ce qu'on ajuste au moins l'un des débits de référence en fonction de la différence entre le poids de produit contenu dans le récipient et le poids de référence.

## Claims

1. A method of weighing out comprising the steps of inserting a substance into a receptacle with at least one filling stage during which filling is performed at a flow rate servo-controlled to a reference flow rate by a servo-control relationship between a flow rate error and a setting applied to a flow rate control member, and measuring the weight of substance contained in the receptacle after filling, characterized in that the at least one filling stage is of fixed duration and in that the method also comprises the steps of comparing the weight of substance contained in the receptacle with a reference weight, and adjusting the reference flow rate or the servo-control relationship as a function of a difference between the weight of substance contained in the receptacle and the reference weight.

2. A weighing out method according to claim 1, the method being characterized in that it includes at least two filling stages at different reference flow rates, and in that at least one of the reference flow rates is adjusted as a function of the difference between the weight of substance contained in the receptacle and the reference weight.

## Patentansprüche

1. Gewichtsdosierungsverfahren mit den folgenden Verfahrensschritten: Einfüllen eines Produkts in einen Behälter gemäß wenigstens einer Füllphase und mit einer Abgabemenge, die durch ein Regelungsverhältnis zwischen einer Abweichung von der Abgabemenge und einem Sollwert eines Elements zur Steuerung der Abgabemenge auf eine Referenz-Abgabemenge geregelt wird, und Messen des Gewichts des nach dem Füllvorgang in dem Behälter enthaltenen Produkts, dadurch gekennzeichnet, daß die genannte, wenigstens eine Füllphase eine feste Dauer hat und daß das Verfahren ferner die Schritte umfaßt, in welchen das Gewicht des in dem Behälter enthaltenen Produkts mit einem Referenz-Gewicht verglichen und die Referenz-Abgabemenge oder das Regelungsverhältnis in Abhängigkeit von einer Differenz zwischen dem Gewicht des in dem Behälter enthaltenen Produkts und dem Referenz-Gewicht eingestellt wird.

2. Gewichtsdosierungsverfahren nach Anspruch 1, gekennzeichnet durch wenigstens zwei Füllphasen mit unterschiedlichen Referenz-Abgabemengen und durch die Einstellung zumindest einer der Referenz-Abgabemengen in Abhängigkeit von der Differenz zwischen dem Gewicht des in dem Behälter enthaltenen Produkts und dem Referenz-Gewicht.
